# EUROPÄISCHE PATENTSCHRIFT

(11) **EP 1 507 999 B1**
(45) Veröffentlichungstag und Bekanntmachung des Hinweises auf die Patenterteilung: **01.10.2008**
(21) Anmeldenummer: 03735440.4
(22) Anmeldetag: 23.05.2003
(51) Int. Cl.: F16N 19/00, F16N 11/00

(54) **VORRATSBEHÄLTER FÜR SCHMIERSTOFFPUMPE**
RESERVOIR FOR A LUBRICANT PUMP
RESERVOIR DE STOCKAGE POUR POMPE A LUBRIFIANT

(30) Priorität: 29.05.2002 DE 20208365 U
(43) Veröffentlichungstag der Anmeldung: 23.02.2005
(73) Patentinhaber: Lincoln GmbH, 69190 Walldorf (DE)
(72) Erfinder: PALUNCIC, Zdravko, 67067 Ludwigshafen (DE); SCHÖNFELD, Andreas, 68789 St.Leon-Rot (DE)
(74) Vertreter: KEIL & SCHAAFHAUSEN Patentanwälte
(86) Internationale Anmeldenummer: PCT/EP2003/005386
(87) Internationale Veröffentlichungsnummer: WO 2003/100314

(56) Entgegenhaltungen:
- EP-A- 0 831 572
- US-A- 5 125 428
- US-A- 5 348 570
- US-A- 5 752 746

## Beschreibung

Die Erfindung bezieht sich auf einen Vorratsbehälter zur Aufnahme von Fett oder dgl. Schmierstoff für eine Schmierstoffpumpe.

Aus der Patentschrift US 5,752,746 ist eine Abdeckkappe für eine an einer Fahrzeugachse anbringbare Schmierstoffkammer bekannt, wobei ein zur Belüftung der Schmierstoffkammer in der Abdeckkappe vorgesehener Durchgang mit einer porösen und luftdurchlässigen aber flüssigkeitsdichten Membran abgedeckt ist. Zum Druckausgleich von innen nach außen ist außerdem ein sogenanntes Duckbill-Ventil vorgesehen.

Aufgabe der vorliegenden Erfindung ist es, eine alternative Ausgestaltung eines Vorratsbehälters zur Aufnahme von Fett oder dgl. Schmierstoff vorzuschlagen, mit welcher ein zuverlässiger Druckausgleich bei Betrieb, auch unter Wasser und auch bei Überfüllen mit Schmierstoff, möglich ist.

Diese Aufgabe wird durch einen Vorratsbehälter mit den Merkmalen des Anspruches 1 gelöst.

Auf diese Weise ist gewährleistet, dass ein Unterdruck, welcher im Behälterinnenraum entsteht, wenn Schmierstoff aus dem Vorratsbehälter von der Schmierstoffpumpe abgeführt wird, jederzeit durch nachströmende Luft ausgeglichen werden kann. Wasser kann jedoch wegen der Membranbeschaffenheit nicht in den Behälterinnenraum eindringen.

Zur einfachen Montage kann die Membran vorteilhafterweise in eine Schraube integriert sein, welche im Bereich eines Durchtrittskanals der Druckausgleichseinrichtung einschraubbar ist.

Die erwähnte luftdurchlässige aber wasserundurchlässige Membran kann bspw. ein textiles Material aufweisen, auf welches Polytetrafluorethylen (z. B. unter dem Handelsnamen Teflon erhältliches PTFE) aufgebracht ist. Derartige Materialien sind z. B. unter dem Markennamen "Goretex" bekannt.

Damit bei einem Überfüllen des Vorratsbehälters mit Schmierstoff nicht nur die verdrängte Luft, sondern auch Schmierstoff über die Druckausgleichseinrichtung in den Behälteraußenraum gelangen kann, weist die Druckausgleichseinrichtung in Weiterbildung des Erfindungsgedankens ein sich bei Überfüllen mit Schmierstoff öffnendes Auslassventil auf.

Das erwähnte Auslassventil für Luft und Schmierstoff bei Überfüllen weist vorzugsweise einen Radialwellendichtring auf, welcher bei Druck von außen dichtet und dessen weiche Dichtlippe bei Druck von innen von einem Dichtsitz abhebt.

Zum Zwecke einer einfachen Montage und sicheren Funktionsweise ist die Druckausgleichseinrichtung in einer Öffnung der Deckelwandung festspannbar.

Die Druckausgleichseinrichtung kann zu diesem Zweck ein Oberteil und ein Unterteil aufweisen, welche in einer Öffnung der Deckelwandung unter Zwischenlage eines Dichtringes einspannbar sind, um Undichtigkeiten zu vermeiden.

Für eine kompakte Bauweise durchragt das Oberteil das Unterteil mit einem Mittelzapfen, an welchem der Dichtsitz für den Radialwellendichtring ausgebildet ist, unter Freihaltung eines geringen ringförmigen Austrittsspaltes für Luft und Schmierstoff koaxial.

In Weiterbildung des Erfindungsgedankens kann in dem die Membran aufweisenden Durchtrittskanal der Druckausgleichseinrichtung vom Behälterinnenraum aus gesehen vor der Membran ein unter im Behälterinnenraum herrschenden Überdruck schließendes Rückschlagventil angeordnet sein, welches verhindert, dass die weiter außen angeordnete Membran mit Schmierstoff in Berührung kommt.

Ferner wird mit der Erfindung vorgeschlagen, dass zur leichteren Montage das Oberteil mit einem Umfangsrand auf dem Unterteil zentrierbar ist.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:

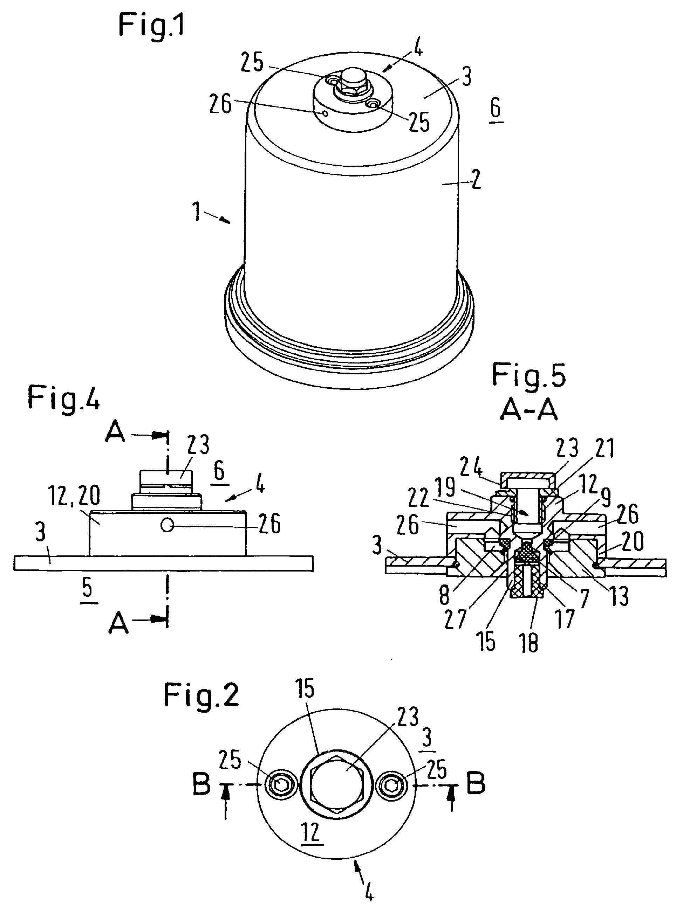

- Fig. 1: einen die Erfindung aufweisenden Vorratsbehälter in Schrägansicht,
- Fig. 2: eine Draufsicht auf eine Druckausgleicheinrichtung in der oberen Deckelwandung des Vorratsbehälters entsprechend Fig. 1,
- Fig. 3: einen Vertikalschnitt durch die Druckausgleichseinrichtung entsprechend der Schnittlinie B - B in Fig. 2,
- Fig. 4: eine Seitenansicht der Druckausgleichseinrichtung gemäß Fig. 2, und
- Fig. 5: einen Vertikalschnitt durch die Druckausgleichseinrichtung entsprechend der Schnittlinie A - A in Fig. 4.

Der zeichnerisch dargestellte Vorratsbehälter 1 dient der Aufnahme von Fett oder dgl. Schmierstoff für eine (nicht dargestellte) Schmierstoffpumpe. Der Vorratsbehälter 1 hat eine zylindrische Seitenwandung 2 und eine den Behälterinnenraum 5 nach oben abschließende Deckelwandung 3. In der Deckelwandung 3 ist eine Druckausgleichseinrichtung 4 angeordnet.

Die Druckausgleichseinrichtung 4 weist in einem Durchtrittskanal 17, welcher sich in einem Oberteil 12 der Druckausgleichseinrichtung 4 koaxial zu dieser erstreckt, eine in einer von oben eingeschraubten Schraube 23 integrierte Membran auf, welche luftdurchlässig, aber wasserundurchlässig ist. Die Schraube 19 ist an ihrem Umfang mittels eines Dichtringes 21 abgedichtet.

In dem Durchtrittskanal 17 unterhalb der Membran befindet sich ein Überdruckventil 27, dessen Ventilkörper 7 sich bei Überdruck in dem Behälterinnenraum 5, welcher z.B. beim Befüllen des Vorratsbehälters 1 mit neuem Schmierstoff auftritt, nach oben gegen einen Dichtsitz legt. Dadurch wird verhindert, dass Schmierstoff bis zur Membran gelangen und deren Funktion beeinträchtigen kann. Wird dagegen Schmierstoff aus dem Behälterinnenraum 5 von einer (nicht dargestellten) Schmierstoffpumpe abgesaugt, wird das Entstehen eines Unterdrucks im Behälterinnenraum 5 dadurch vermieden, dass über einen unter dem Schraubenkopf 23 freibleibenden Zufuhrschlitz 24 und über die Membran Luft vom Behälteraußenraum 6 in den Behälterinnenraum 5 nachströmen kann. Dabei öffnet das Überdruckventil 27. Der Bewegungsweg des Ventilkörpers 7 ist durch eine von unten in den Durchtrittskanal 17 eingesteckte Buchse 18 aus Kunststoff begrenzt.

Das Oberteil 12 weist einen Umfangsrand 20 auf, mit welchem es auf einem Unterteil 13 der Druckausgleichseinrichtung 4 zentriert ist. Oberteil 12 und Unterteil 13 haben einen etwas größeren Durchmesser als eine Öffnung 11 in der Deckelwandung 3. Auf diese Weise können Oberteil 12 und Unterteil 13 unter Zwischenlage eines Dichtringes 14 am Rand der Öffnung 11 mittels Spannschrauben 25 festgespannt werden.

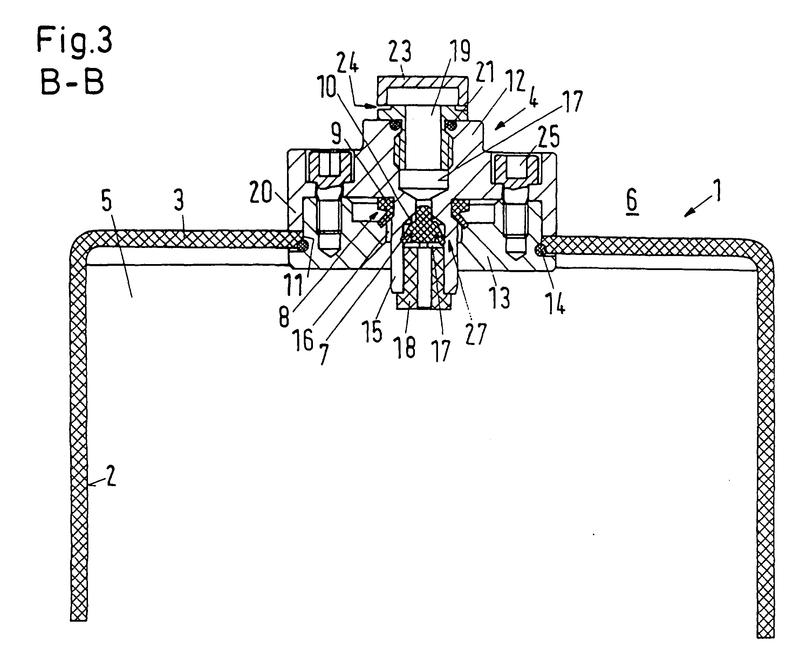

Das Oberteil 12 ragt mit einem Mittelzapfen 15 durch das Unterteil 13 unter Freihaltung eines Austrittsspalts 16 für Luft und Schmierstoff beim Überfüllen hindurch. Oberhalb des Austrittsspalts 16 ist an dem Mittelzapfen 5 ein Dichtsitz 10 für einen Radialwellendichtring 9 ausgebildet, so dass ein Auslassventil 8 entsteht. Wie aus Fig. 3 ersichtlich, hat der Radialwellendichtring 9 eine Dichtlippe oberhalb des Austrittsspalts 16, welche bei Druckbeaufschlagung von innen von dem Dichtsitz 10 abheben kann, so dass überschüssige Luft und Schmierstoff über radiale Auslasskanäle 26 austreten können.

Auf diese Weise ist ein Vorratsbehälter für eine Schmierstoffpumpe geschaffen, bei welchem ein Luftdruckausgleich sowohl beim Befüllen als auch beim Entleeren des Behälterinnenraums mit Schmierstoff erfolgt. Gleichwohl ist ein Einsatz unter Wasser möglich. Beim Überfüllen ist ferner ein Austreten von Schmierstoff über die Druckausgleichseinrichtung gewährleistet, ohne dass die luftdurchlässige, aber wasserundurchlässige Membran mit Schmierstoff in Berührung kommt und in ihrer Funktion beeinträchtigt wird. Die Druckausgleichseinrichtung bildet dabei eine leicht montierbare Baueinheit.

### Bezugszeichenliste

- 1: Vorratsbehälter
- 2: Seitenwandung
- 3: Deckelwandung
- 4: Druckausgleichseinrichtung
- 5: Behälterinnenraum
- 6: Behälteraußenraum
- 7: Ventilkörper
- 8: Auslassventil für Luft und Schmierstoff
- 9: Radialwellendichtring
- 10: Dichtsitz
- 11: Öffnung
- 12: Oberteil
- 13: Unterteil
- 14: Dichtring
- 15: Mittelzapfen
- 16: Austrittsspalt für Luft und Schmierstoff
- 17: Durchtrittskanal für Luft
- 18: Buchse
- 19: Schraube mit integrierter Membran
- 20: Umfangsrand
- 21: Dichtring
- 22: Gewinde
- 23: Schraubenkopf
- 24: Zufuhrschlitz für Luft
- 25: Spannschrauben
- 26: Auslasskanäle für Luft und Schmierstoff
- 27: Überdruckventil

## Patentansprüche

1. Vorratsbehälter zur Aufnahme von Fett oder dgl. Schmierstoff für eine Schmierstoffpumpe, mit einer z.B. zylindrischen Seitenwandung (2) und einer den Behälterinnenraum (5) nach oben abschließenden Deckelwandung (3), in welcher eine Druckausgleichseinrichtung (4) so angeordnet ist, dass der Behälterinnenraum (5) mit dem Behälteraußenraum (6) über eine luftdurchlässige, aber wasserundurchlässige Membran in Strömungsverbindung steht, **dadurch gekennzeichnet, dass** die Druckausgleichseinrichtung (4) ein Oberteil (12) und ein Unterteil (13) aufweist, wobei das Oberteil (12) das Unterteil (13) mit einem Mittelzapfen (15), an welchem ein Dichtsitz (10) für einen Radialwellendichtring (9) ausgebildet ist, unter Freihaltung eines geringen ringförmigen Austrittsspalts (16) für bei Überfüllen austretende Luft und Schmierstoff koaxial durchragt.

2. Vorratsbehälter nach Anspruch 1, **dadurch gekennzeichnet, dass** die Membran in eine Schraube (19) integriert ist, welche im Bereich eines Durchtrittskanals (17) der Druckausgleichseinrichtung (4) einschraubbar ist.

3. Vorratsbehälter nach Anspruch 1 oder 2, **dadurch gekennzeichnet, dass** die Membran ein textiles Material aufweist, auf welches Polytetrafluorethylen (Teflon) aufgebracht ist (Goretex).

4. Vorratsbehälter nach einem der Ansprüche 1 bis 4, **dadurch gekennzeichnet, dass** die Druckausgleichseinrichtung (4) ein sich bei Überfüllen mit Schmierstoff öffnendes Auslassventil (8) aufweist.

5. Vorratsbehälter nach Anspruch 4, **dadurch gekennzeichnet, dass** das Auslassventil (8) einen Radialwellendichtring (9) aufweist, welcher bei Druck von außen dichtet und dessen weiche Dichtlippe bei Druck von innen von einem Dichtsitz (10) abhebt.

6. Vorratsbehälter nach einem der vorhergehenden Ansprüche, **dadurch gekennzeichnet, dass** die Druckausgleichseinrichtung (4) in einer Öffnung (11) der Deckelwandung (3) festspannbar ist.

7. Vorratsbehälter nach einem der vorhergehenden Ansprüche, **dadurch gekennzeichnet, dass** die Druckausgleichseinrichtung (4) ein Oberteil (12) und ein Unterteil (13) aufweist, welche in einer Öffnung (11) der Deckelwandung (3) unter Zwischenlage eines Dichtringes (14) festspannbar sind.

8. Vorratsbehälter nach einem der vorhergehenden Ansprüche, **dadurch gekennzeichnet, dass** in dem Durchtrittskanal (17) der Druckausgleichseinrichtung (4), in welchem die Membran angeordnet ist, vom Behälterinnenraum (5) aus gesehen vor der Membran ein unter im Behälterinnenraum (5) herrschenden Überdruck schließendes Rückschlagventil (27) angeordnet ist.

9. Vorratsbehälter nach einem der vorhergehenden Ansprüche, **dadurch gekennzeichnet, dass** das Oberteil (12) mit einem Umfangsrand (20) auf den Unterteil (13) zentrierbar ist.

## Claims

1. A reservoir for holding grease or a similar lubricant for a lubricant pump, comprising a, for example cylindrical, side wall (2) and a cover wall (3) which closes the interior (5) of the reservoir at the top and in which a pressure compensation device (4) is disposed in such a way that the interior (5) of the reservoir is in flow communication with the exterior (6) of the reservoir via an air-permeable, but water-impermeable diaphragm, **characterized in that** the pressure compensation device (4) comprises an upper portion (12) and a lower portion (13), the upper portion (12) passing coaxially through the lower portion (13) with a central pin (15), on which a sealing seat (10) for a radial shaft seal (9) is formed, leaving a small annular overflow gap (16) for air and lubricant to escape in the event of overfilling.

2. A reservoir according to Claim 1, **characterized in that** the diaphragm is integrated into a screw (19), which can be screwed down in the region of a through channel (17) of the pressure compensation device (4).

3. A reservoir according to Claim 1 or 2, **characterized in that** the diaphragm comprises a textile material, onto which polytetrafluoroethylene (Teflon) is applied (Goretex).

4. A reservoir according to one of Claims 1 to 3, **characterized in that** the pressure compensation device (4) includes an outlet valve (8) which opens in the event of overfilling with lubricant.

5. A reservoir according to Claim 4, **characterized in that** the outlet valve (8) has a radial shaft seal (9) which, under pressure from the outside, forms a seal and whose soft sealing lip, under pressure from the inside, lifts up off a sealing seat (10).

6. A reservoir according to one of the preceding claims, **characterized in that** the pressure compensation device (4) can be clamped in an opening (11) in the cover wall (3).

7. A reservoir according to one of the preceding claims, **characterized in that** the pressure compensation device (4) comprises an upper portion (12) and a lower portion (13) which can be clamped in an opening (11) in the cover wall (3) with interposition of a sealing ring (14).

8. A reservoir according to one of the preceding claims, **characterized in that** provided in the through channel (17) of the pressure compensation device (4) in which the diaphragm is disposed, and located in front of the diaphragm when viewed from the interior (5) of the reservoir, is a check valve (27) which closes when overpressure prevails in the interior (5) of the reservoir.

9. A reservoir according to one of the preceding claims, **characterized in that** the upper portion (12) with a circumferential edge (20) can be centred on the lower portion (13).

## Revendications

1. Réservoir destiné à recevoir des graisses ou des lubrifiants semblables pour une pompe à lubrifiant, avec une paroi latérale (2), par exemple cylindrique, et une paroi de couvercle (3) fermant vers le haut l'espace intérieur du réservoir (5) dans lequel couvercle est disposé un dispositif d'équilibrage de pression (4) de telle sorte que l'intérieur du réservoir (5) est en communication d'écoulement avec l'environnement extérieur du réservoir (6) par une membrane perméable à l'air, mais imperméable à l'eau, **caractérisé en ce que** le dispositif d'équilibrage de pression (4) comprend une pièce supérieure (12) et une pièce inférieure (13), la pièce supérieure (12) traverse de façon coaxiale la pièce inférieure (13) avec un tenon central (15) sur lequel est formé un siège d'étanchéité (10) pour une bague à lèvres avec ressort (9) tout en conservant une faible fente de sortie (16) annulaire pour l'air et le lubrifiant sortant en cas de remplissage excessif.

2. Réservoir selon la revendication 1, **caractérisé en ce que** la membrane est intégrée dans une vis (19) qui peut être vissée au niveau d'un canal de passage (17) du dispositif d'équilibrage de pression (4).

3. Réservoir selon la revendication 1 ou 2, **caractérisé en ce que** la membrane est munie d'un matériau textile sur lequel est appliqué du polytétrafluoroéthylène (téflon) (Goretex).

4. Réservoir selon l'une des revendications 1 à 3, **caractérisé en ce que** le dispositif d'équilibrage de pression (4) est muni d'une soupape de sortie (8) qui s'ouvre en cas de remplissage excessif.

5. Réservoir selon la revendication 4, **caractérisé en ce que** la soupape de sortie (8) est munie d'une bague à lèvres avec ressort (9) qui étanchéifie en cas de pression de l'extérieur et dont la lèvre d'étanchéité souple se soulève d'un siège d'étanchéité (10) en cas de pression de l'intérieur.

6. Réservoir selon l'une des revendications précédentes, **caractérisé en ce que** le dispositif d'équilibre de pression (4) peut être fixé fermement dans une ouverture (11) de la paroi de couvercle (3).

7. Réservoir selon l'une des revendications précédentes, **caractérisé en ce que** le dispositif d'équilibrage de pression (4) est muni d'une pièce supérieure (12) et d'une pièce inférieure (13) qui peuvent être fixées fermement dans une ouverture (11) de la paroi de couvercle (3) en interposant une bague d'étanchéité (14).

8. Réservoir selon l'une des revendications précédentes, **caractérisé en ce qu'**une valve antiretour (27) se fermant en cas de surpression dans l'espace intérieur du réservoir (5) est disposée dans le canal de passage (17) du dispositif d'équilibre de pression (4) dans lequel est disposé la membrane, avant la membrane considéré depuis l'espace intérieur du réservoir (5).

9. Réservoir selon l'une des revendications précédentes, **caractérisé en ce que** la pièce supérieure (12) peut être centrée sur la pièce inférieure (13) avec un bord circonférentiel (20).
